# EUROPÄISCHE PATENTSCHRIFT

(11) **EP 0 462 489 B1**
(45) Veröffentlichungstag und Bekanntmachung des Hinweises auf die Patenterteilung: **13.10.1993**
(21) Anmeldenummer: 91109516.4
(22) Anmeldetag: 10.06.1991
(51) Int. Cl.: A01F 15/10

(54) **Fördervorrichtung für eine Erntemaschine**
Conveying device for harvesting machines
Dispositif transporteur pour une moissonneuse

(30) Priorität: 18.06.1990 DE 4019337
(43) Veröffentlichungstag der Anmeldung: 27.12.1991
(73) Patentinhaber: DEERE & COMPANY, Moline, Illinois 61265 (US)
(72) Erfinder: Viaud, Jean, F-57200 Sarreguemines (FR)
(74) Vertreter: Feldmann, Bernhard

(56) Entgegenhaltungen:
- DE-C- 1 141 125
- FR-A- 1 362 069
- US-A- 4 580 398

## Beschreibung

Die Erfindung betrifft eine Fördervorrichtung für eine Erntebergungsmaschine, insbesondere für eine Ballenpresse, mit einem Schlitze aufweisenden Förderboden und in den Schlitzen geführten und während des Fördervorgangs aus diesen heraustretenden Förderzinken, die eine voreilende Stirnfläche besitzen.

Eine bekannte Fördervorrichtung an einer Ballenpresse zum Bilden von Rundballen (US-PS-4,580,398) weist einen Förderboden auf, der von Schlitzen durchdrungen ist und auf dem aufgenommenes Erntegut von einem Förderer, nämlich einer Pick-Up, zu einer Ballenbildungskammer bewegt wird. Durch die Schlitze erstrecken sich Förderzinken, die eine gesteuerte Bewegung ausführen und dabei das Erntegut transportieren. Während des Fördervorgangs beschreiben die Spitzen der Förderzinken im wesentlichen ein Oval, das mit einer seiner Längsseiten parallel zu der Oberfläche des Förderbodens verläuft.

Die Förderwirkung dieser bekannten Förderzinken wird nicht unter allen Umständen als befriedigend angesehen; vielmehr können Verstopfungen am Eingang zu der Ballenbildungskammer auftreten.

Die der Erfindung zugrunde liegende Aufgabe wird darin gesehen, eine Fördervorrichtung der eingangs genannten Art vorzuschlagen, bei der Verstopfungen zumindest weitgehendst vermieden werden.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise wird das zu fördernde Gut in den treppenartig ausgebildeten Stufen gehalten und kann während der Abgabe an der stromabwärts gelegenen Stelle nicht mehr zurückrutschen. Nachdem das Gut von einer Stufe auf die nächste gerutscht ist, wird es auch nur von einem kleineren Bereich des Förderzinkens gehalten, so daß dessen Reibkraft abnimmt und das Gut schneller zu der Abgabestelle rutscht.

Die Wirkung der Stufen an den Förderzinken kann noch erhöht werden, indem dessen Bewegung gesteuert auf einer bestimmten Kurve verläuft, so daß die Stufen in einem vorbestimmbaren Bereich wirksam werden können.

Die Ausbildung der Stufen als rechtwinklige Einschnitte stellt die optimale Form dar, da sie weder zu Verhakungen noch zu einem gering aggressiven Förderverhalten führt; dennoch sind auch Ausführungsformen mit nicht rechtwinklig geführten Schnitten möglich. Auch die Schenkel der Stufen selbst verlaufen zueinander unter einem rechten Winkel.

Die erfindungsgemäße Fördervorrichtung ist nicht nur vorteilhaft bei der direkten Aufnahme des Guts vom Boden, sondern auch als Zwischenförderer bzw. als einer von mehreren Förderern innerhalb einer Förderkette.

Je nach den Einsatzverhältnissen kann auch der Förderer mit den vorteilhaft gestalteten Förderzinken ausgerüstet sein.

In der Zeichnung ist ein nachfolgend näher beschriebenes Ausführungsbeispiel der Erfindung dargestellt. Es zeigt:
- Fig. 1: eine Erntebergungsmaschine mit einer Fördervorrichtung und einem Förderer in schematischer Darstellung und in Seitenansicht
- Fig. 2: die Fördervorrichtung und den Förderer aus Figur 1 in einer vergrößerten Darstellung.

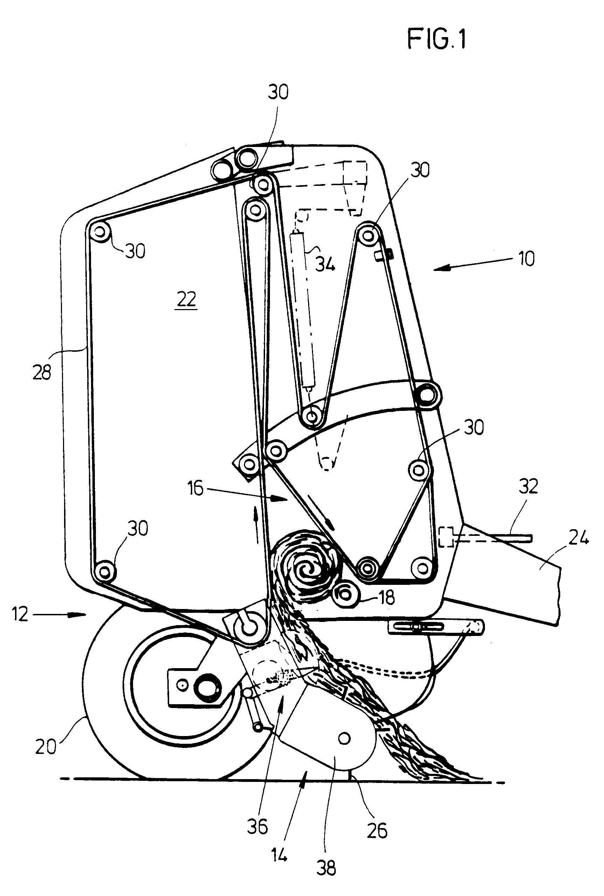

Eine in Figur 1 dargestellte Erntebergungsmaschine 10 in der Art einer Ballenpresse setzt sich im wesentlichen aus einem Rahmen 12, einer Aufnahmevorrichtung 14, einer Ballenbildungskammer 16 und einer als Starterwalze ausgebildeten Walze 18 zusammen.

Die Ballenpresse 10 wird benutzt, um Stroh, Heu, Gras oder dergleichen Erntegüter, die auf einem Feld in Schwade abgelegt sind oder von dort abgetrennt werden, in zylindrische Ballen, sogenannte Rundballen, zu pressen. Sie weist eine Ballenbildungskammer 16 mit veränderbarem Durchmesser auf und entspricht in ihrem Aufbau im wesentlichen einer Ballenpresse, wie sie in der US-PS-4,428,282 beschrieben ist. Es ist aber auch möglich, der Erfindung eine andere Bauart einer Ballenpresse zugrunde zu legen, insbesondere eine mit einer nicht in ihrer Größe veränderbaren Ballenbildungskammer.

Der Rahmen 12 umfaßt als wesentliche Bestandteile ein Fahrwerk 20, Seitenwände 22 und eine Deichsel 24 zur Verbindung mit einem Ackerschlepper.

Die Aufnahmevorrichtung 14 wird in dem vorliegenden Ausführungsbeispiel von einer Fördervorrichtung 36 und einem als sogenannte Pick-Up ausgebildeten Förderer 38 gebildet, der in einem Schwad auf dem Boden abgelegtes Erntegut mittels umlaufender Förderelemente 26 aufnimmt und es mittels der erfindungsgemäßen Fördervorrichtung 36 der Ballenbildungskammer 16 zuführt. In einem anderen Ausführungsbeispiel könnte anstatt des Förderers 38 auch ein Mähvorsatz verwendet werden.

Die Ballenbildungskammer 16 nimmt in Figur 1 und somit in ihrem anfänglichen Zustand die Form eines Keils ein, der seitlich von einem Satz Riemen 28 begrenzt wird. Jeder Satz Riemen 28 besteht aus mehreren nebeneinander angeordneten Riemen 28, die über Rollen 30 geführt werden. Eine oder mehrere der Rollen 30 werden über eine Antriebsvorrichtung 32 von dem Ackerschlepper aus in Drehung versetzt und bewegen die Riemen 28 in eine bestimmt Richtung. Die Riemen 28 werden gespannt, indem mittels einer als Feder ausgebildeten Spannvorrichtung 34 einige der Rollen 30 mit den darüberlaufenden Riemen 28 seitlich ausgelenkt werden. Es ist aus Figur 1 zu entnehmen, daß in die Ballenbildungskammer 16 Erntegut eingespeist und dort von den gegenläufigen Riemen 28 in Drehung versetzt wird, um einen Ballenkern zu bilden. Während der Fahrt über das Feld wird mehr und mehr Erntegut der Ballenbildungskammer 16 zugeführt, so daß sich der Ballenkern vergrößert und die ihn umgebenden Riemen 28 seitlich auslenkt. Die Riemen 28 können unter Erhöhung der Spannung an der Spannvorrichtung 34 mit den ihnen zugeordneten Rollen 30 solange ausweichen, bis die Ballenbildungskammer 16 nahezu den gesamten Raum zwischen den Seitenwänden 22 eingenommen hat; dann ist der Preßvorgang zu beenden.

Die Walze 18 befindet sich im unteren Bereich der Ballenbildungskammer 16, erstreckt sich längs zwischen den beiden Seitenwänden 22, verläuft parallelachsig zu den Rollen 30, verändert ihre Lage während des Preßvorgangs nicht, bewegt sich stets nahe der Oberflächen der Riemen 28 und wird ebenfalls mittels der Antriebsvorrichtung 32 angetrieben. Die Walze 18 nimmt aufgrund ihrer Lage die Funktion einer Starterwalze ein, d. h. sie unterstützt in der Anfangsphase des Preßvorgangs die Bildung des Ballenkerns, indem sie das Erntegut in der zunächst noch leeren Ballenbildungskammer 16 mit in Drehung versetzt; hierzu bewegt sie sich entgegengesetzt zu der Bewegungsrichtung der angrenzenden Riemen 28.

Die Fördervorrichtung 36 enthält als wesentliche Bestandteile einen Förderboden 40, Schlitze 42, Förderzinken 44 und eine Zinkensteuerung 46. Sie folgt stromabwärts auf den Förderer 38 und transportiert das Erntegut in die Ballenbildungskammer 16.

Der Förderboden 40 wird aus einem Blech hergestellt und stellt eine Rutschfläche dar, die unmittelbar an den Förderer 38 anschließt und auf der das Erntegut entlanggleitet.

Die Schlitze 42 erstrecken sich in der Bewegungsrichtung der Förderzinken 44, also in der Förderrichtung selbst; sie sind geringfügig breiter als die Förderzinken 44 in dem Bereich, in dem sie durch den Förderboden 40 bzw. die Schlitze 42 hindurchtreten.

Die Förderzinken 44 sind in einer oder mehreren Reihen parallel zueinander angeordnet und bewegen sich zumindest in Gruppen gemeinsam. In ihrer Gesamtheit erstrecken sich die Förderzinken 44 über die gesamte Breite der Aufnahmevorrichtung 14 und weisen im wesentlichen, abgesehen von noch zu beschreibenden Stufen 56, die Form eines spitzen Keils auf, dessen breitester Teil 48 stets unterhalb des Förderbodens 40 und somit stets außerhalb des Förderraums und dessen Spitze 50 während des Fördervorgangs oberhalb des Förderbodens 40 verläuft. Die Förderzinken 44 weisen eine voreilende Stirnfläche 52 und eine nacheilende Stirnfläche 54 auf, die sich im wesentlichen quer zur Förderebene erstrecken. Mit der voreilenden Stirnfläche 52 wird das Erntegut erfaßt, das dann an ihr anliegt, bis es an der stromabwärts gelegenen Abgabestelle außer Eingriff mit den Förderzinken 44 gerät. Mit der voreilenden Stirnfläche 52 wird auf das Erntegut ein bestimmter, sich aus dem Bewegungswiderstand des Förderguts über den Förderboden 40 ergebender Druck ausgeübt. Die voreilende Stirnfläche 52 verläuft nicht geradlinig, sondern in der Form einer Treppe, was dadurch erreicht wird, daß senkrecht zu der Stirnfläche 52 L-förmige Stufen 56 eingearbeitet werden. Die Schenkel dieser Stufen verlaufen zueinander unter einem Winkel von ca. 90°, wobei der sich in der Längsrichtung der Förderzinken 44 erstreckende Schenkel um ein mehrfaches länger ist als der rechtwinklig dazu verlaufende Schenkel.

Die nacheilende Stirnfläche 54 kann sowohl geradlinig wie auch in Stufen 56 abgesetzt verlaufen. Da die nacheilende Stirnfläche 54 erst am Ende des Fördervorgangs mit dem Fördergut in Eingriff gelangt, können an dieser die Stufen 56 entfallen oder in einer geringeren Anzahl vorgesehen werden. Es bestehen jedoch keine Bedenken, die Förderzinken 44 spiegelbildlich, d. h. mit zwei gleichermaßen abgesetzte Stufen 56 aufweisenden Stirnflächen 52, 54, zu versehen.

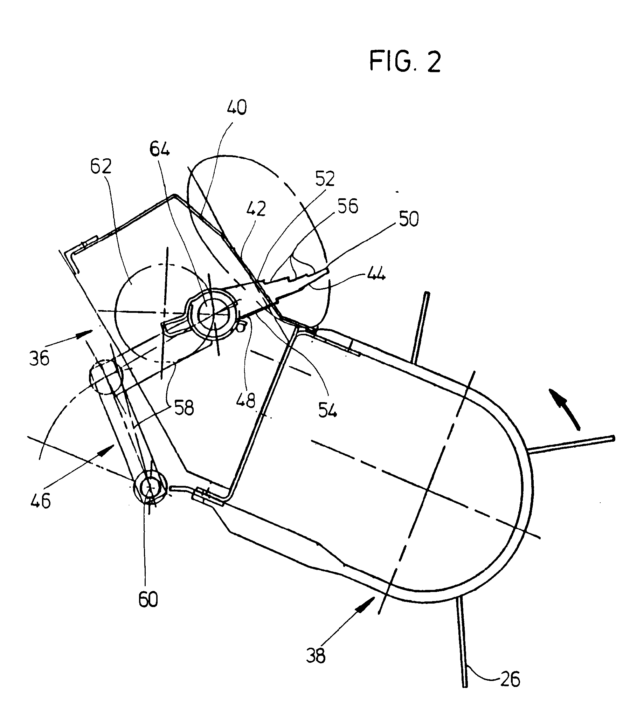

Die Förderzinken 44 erstrecken sich während des Fördervorgangs, der in Figur 2 von rechts nach links erfolgt, mit ihrem größten Teil oberhalb des Förderbodens 40, d. h. auf der der Zinkensteuerung 46 abgelegenen Seite. Während des Fördervorgangs beschreibt die Spitze 50 der Förderzinken 44 eine im wesentlichen ovale Kurve und zieht sich erst während eines Rückholgangs unter den Förderboden 40 zurück. Zu Beginn des Fördervorgangs reichen die Förderzinken 44 geringfügig über den stromaufwärts gelegenen Förderer 38 und streifen vorzugsweise die Wirkungsfläche der dort vorgesehenen Förderelemente 26.

Die Zinkensteuerung 46 setzt sich aus einer zweiarmigen Kurbel 58, einer Lagerstelle 60 und einem Exzenter 62 mit einem Zapfen 64 zusammen. Die Förderzinken 44 sind auf dem Zapfen 64 schwenkbar gelagert und mit der Kurbel 58 schwenkbar verbunden. Der Exzenter 62 überträgt auf den Zapfen 64 eine ihm aufgegebene Kreisbewegung, so daß die Förderzinken 44 senkrecht zu dem Förderboden 40 bewegt werden. Die Stellung der Förderzinken 44 richtet sich nach dem Winkel, den die Arme der Kurbel 58 jeweils zueinander einschließen. Während sich der Exzenter 62 dreht und dabei den oder die Förderzinken 44 senkrecht zu dem Förderboden 40 bewegt, wird mittels der zweiarmigen Kurbel 58 auch die Neigung der Förderzinken 44 mit Bezug auf die Oberfläche des Förderbodens 40 gesteuert. Als Resultat beschreibt die Spitze 50 der Förderzinken 44 die angedeutete ovale Kurvenbahn.

Stromabwärts der Fördervorrichtung 36 schließt der Förderer 38 an, der in der Art einer herkömmlichen Pick-Up gehalten ist und gewöhnliche Förderelemente 26 enthält; einer näheren Beschreibung dieses Förderers 38 bedarf es daher nicht. Es ist jedoch zu bemerken, daß die Förderelemente 26 auch in der abgesetzten, gestuften Form der Förderzinken 44 ausgebildet sein könnten.

Es ist nicht erforderlich, der Fördervorrichtung 36 einen Förderer 38 vorzuschalten; vielmehr könnte die Fördervorrichtung 36 das Fördergut auch direkt vom Boden aufnehmen.

Aufgrund des Vorbeschriebenen ergibt sich die Funktion der erfindungsgemäßen Fördervorrichtung 36 wie folgt. Das als Erntegut auf dem Boden abgelegte Fördergut wird von dem Förderer 38 aufgehoben und mittels der Förderelemente 26 den Förderzinken 44 in Figur 2 von unten nach oben und von rechts nach links zugeführt. Die Förderzinken 44 bewegen es in der gleichen Richtung weiter zu dem Eingang der Ballenbildungskammer 16, wie sie in Figur 1 angedeutet ist, wobei die Spitzen der Förderzinken 44 die gezeigte ovale Kurvenbahn beschreiben. Sobald die Förderzinken 44 beginnen, sich hinter den Förderboden 40 zurückzuziehen, sowie sobald das Fördergut in die Ballenbildungskammer 16 hinausgezogen wird, rutscht es von dem Förderboden 40 weg auf der voreilenden Stirnfläche 52 entlang und setzt sich in der nächsten Stufe 56 fest, bis es zu der nächsten Stufe 56 gelangt. Auf diese Weise kann das Fördergut nicht mehr zu dem Förderboden 40 hinrutschen, so daß sich ein positiver Fördereffekt ergibt.

## Patentansprüche

1. Fördervorrichtung (36) für eine Erntebergungsmaschine (10), insbesondere für eine Ballenpresse, mit einem Schlitze (42) aufweisenden Förderboden (40) und in den Schlitzen (42) geführten und während des Fördervorgangs aus diesen heraustretenden Förderzinken (44), die eine voreilende Stirnfläche (52) besitzen, dadurch gekennzeichnet, daß die Förderzinken (44) auf ihrer voreilenden Stirnfläche (52) mehrere, treppenartig ausgebildete Stufen (56) aufweisen.

2. Fördervorrichtung nach Anspruch 1, dadurch gekennzeichnet, daß die Stufen (56) durch einen rechtwinklig zu der Oberfläche der voreilenden Stirnfläche (52) verlaufenden Ausschnitt gebildet werden.

3. Fördervorrichtung nach Anspruch 1 oder 2, dadurch gekennzeichnet, daß die Förderzinken (44) während des Fördervorgangs eine im wesentlichen ovale Bahn beschreiben, sich anfänglich der Förderbewegung aus den Schlitzen (42) herausbewegen, während der Förderbewegung im wesentlichen parallel zu diesen verlaufen und sich am Ende der Förderbewegung in die Schlitze (42) zurückziehen.

4. Fördervorrichtung nach einem oder mehreren der vorherigen Ansprüche, dadurch gekennzeichnet, daß ihr stromaufwärts ein Förderer (38), insbesondere eine Aufsammelvorrichtung, vorgeschaltet ist, die das Fördergut aufnimmt.

5. Fördervorrichtung nach einem oder mehreren der vorherigen Ansprüche, dadurch gekennzeichnet, daß ihr stromabwärts eine Ballenbildungskammer (16) nachgeschaltet ist.

6. Fördervorrichtung nach Anspruch 4, dadurch gekennzeichnet, daß der Förderer (38) ebenfalls aus Schlitzen herausragende Förderelemente (26) aufweist und die Förderzinken (44) und die Förderelemente (26) sich während der Weitergabe des Guts überlappen oder aneinander heranreichen.

7. Fördervorrichtung nach einem oder mehreren der vorherigen Ansprüche, dadurch gekennzeichnet, daß sowohl die Förderzinken (44) als auch die Förderelemente (26) auf ihrer dem Fördergut zugewandten Seite, d. h. ihrer voreilenden Stirnfläche (52), mehrere treppenartig angelegte Stufen (56) aufweisen.

8. Fördervorrichtung nach einem oder mehreren der vorherigen Ansprüche, dadurch gekennzeichnet, daß auch an einer nacheilenden Stirnfläche (54) Stufen (56) angeordnet sind.

## Claims

1. Conveying device (36) for a harvesting machine (10), in particular for a bale press, with a conveying base (40) comprising slots (42) and with conveying tines (44) which are guided in the slots (42) and emerge therefrom during the conveying operation and which have a leading face (52), characterised in that the conveying tines (44) comprise on their leading face (52) several steps (56) of staircase-like construction.

2. Conveying device according to claim 1, characterised in that the steps (56) are formed by a notch extending perpendicularly to the surface of the leading face (52).

3. Conveying device according to claim 1 or 2, characterised in that the conveying tines (44) describe an essentially oval path during the conveying operation, move out of the slots (42) at the beginning of the conveying movement, extend essentially parallel thereto during the conveying movement, and are retracted into the slots (42) at the end of the conveying movement.

4. Conveying device according to one or more of the preceding claims, characterised in that upstream of it is mounted a conveyor (38), in particular a pick-up device, which picks up the material to be conveyed.

5. Conveying device according to one or more of the preceding claims, characterised in that downstream of it is mounted a bale forming chamber (16).

6. Conveying device according to claim 4, characterised in that the conveyor (38) comprises conveying elements (26) also protruding from slots, and the conveying tines (44) and the conveying elements (26) overlap each other or extend up to each other during transfer of the material.

7. Conveying device according to one or more of the preceding claims, characterised in that both the conveying tines (44) and the conveying elements (26) comprise several staircase-like steps (56) on their side facing towards the material to be conveyed, i.e. their leading face (52).

8. Conveying device according to one or more of the preceding claims, characterised in that steps (56) are also arranged on a trailing face (54).

## Revendications

1. Dispositif transporteur (36) pour une chargeuse de récolte (10), notamment pour une presse à balles, avec un fond transporteur (40) présentant des fentes (42), et avec des griffes transporteuses (44) qui sont guidées dans les fentes (42), sortent de ces fentes pendant le processus de transport et possèdent une face frontale avant (52), **caractérisé** en ce que les griffes transporteuses (44) présentent sur leur face frontale avant (52) plusieurs gradins (56) configurés en escalier.

2. Dispositif transporteur selon la revendication 1, **caractérisé** en ce que les gradins (56) sont formés par une découpe s'étendant perpendiculairement à la surface de la face frontale avant (52).

3. Dispositif transporteur selon la revendication 1 ou 2, **caractérisé** en ce que les griffes transporteuses (44) décrivent une trajectoire sensiblement ovale pendant le processus de transport, sortant des fentes (42) au début du mouvement de transport, s'étendant sensiblement parallèlement à ces fentes pendant le mouvement de transport et rentrant dans les fentes (42) à la fin du mouvement de transport.

4. Dispositif transporteur selon l'une quelconque des revendications précédentes, **caractérisé** en ce qu'il est précédé, en amont, d'un convoyeur (38), notamment un dispositif ramasseur, qui recueille le produit à transporter.

5. Dispositif transporteur selon l'une quelconque des revendications précédentes, **caractérisé** en ce qu'il est suivi, en aval, d'une chambre de formation de balles (16).

6. Dispositif transporteur selon la revendication 4, **caractérisé** en ce que le convoyeur (38) présente lui aussi des éléments transporteurs (26) sortant de fentes, et les griffes transporteuses (44) et les éléments transporteurs (26) se chevauchent ou se rapprochent pendant le transfert du produit.

7. Dispositif transporteur selon l'une quelconque des revendications précédentes, **caractérisé** en ce que tant les griffes transporteuses (44) que les éléments transporteurs (26) présentent sur leur côté tourné vers le produit transporté, c'est-à-dire sur leur face frontale avant (52), plusieurs gradins (56) configurés en escalier.

8. Dispositif transporteur selon l'une quelconque des revendications précédentes, **caractérisé** en ce que des gradins (56) sont également formés sur une face frontale arrière (54).
